# EUROPEAN PATENT SPECIFICATION

(11) **EP 2 374 649 B1**
(45) Date of publication and mention of the grant of the patent: **22.05.2013**
(21) Application number: 11159840.5
(22) Date of filing: 25.03.2011
(51) Int. Cl.: B60K 17/28, A01B 71/06, F16D 1/10, F16D 11/14

(54) **Agricultural driving mechanism and related tool**
Landwirtschaftlicher Antriebsmechanismus und zugehöriges Werkzeug
Mécanisme de commande agricole et outil correspondant

(30) Priority: 30.03.2010 CN 201010156328
(43) Date of publication of application: 12.10.2011
(73) Proprietor: BCS S.p.A., 20123 Milano (MI) (IT)
(72) Inventor: Omodeo Vanone, Fabrizio, 27036, MORTARA (PV) (IT)
(74) Representative: Branca, Emanuela

(56) References cited:
- WO-A1-2008/037006
- CN-Y- 201 388 390
- DE-A1- 1 482 841
- DE-A1- 3 140 917
- FR-A- 1 560 109
- FR-A1- 2 263 675
- US-A- 4 892 430

## Description

The present invention refers to an agricultural driving mechanism and to a related tool.

Document CN 201 388 390 describes a driving mechanism according to the preamble of claim 1.

In particular, the present invention refers to the two elements, driving mechanism and tool, which once coupled together make agricultural machines, for example of the single-axle type driven on foot. Depending on the type of tool that is coupled, such agricultural machines are called tillers or mowers.

In such machines, usually moved by an internal combustion engine running on petrol or on Diesel cycle, the power is transmitted through a clutch and/or a gearshift to an axle equipped with wheels and to a power take-off that engages the tool.

Indeed, through the power take-off the power flows from the driving mechanism to the tool activating depending on requirements.

The machine is usually driven on foot through a motorcycle style steering bar, usually known as handlebars, which carries the necessary controls for the various actuations.

Therefore, the machine comprises, in succession, the tool, the handlebars, the gearshift, the wheel axle and the motor.

If devised to be polyvalent, the machine can foresee for the handlebars to be able to be rotated by 180° so that they are on the side of the motor.

In this case the machine comprises, in succession, the handlebars, the motor, the gearshift, the wheel axle and the tool.

In this way the machine becomes suitable for the use of front tools, like for example sickle mowers, rotary mowers or reel mowers and, in this circumstance, it is often called "reversible mower".

Sometimes the possibility of rotating the handlebars is unavailable and the machine can be used with just the tiller, in which case it is a "pure" tiller or just with front tool and, in this case, it is known as a "pure" mower.

One of the biggest advantages linked to the use of these machines is their polyvalence.

They can indeed be considered to be power units with self-displacement capability that, through the power take-off, are able to actuate a wide range of tools. Normally, the tools are rigidly fixed to the machine through a series of screws.

In order to make operation quicker and easier, increasing productivity and versatility, quick-fastening devices can be used, usually through telescopic pipes and locking bolts.

Whatever the solution adopted for the mechanical attachment between the machine and the tool it is necessary for the two parts of the transmission shaft, usually longitudinal, to be able to connect together easily through a joint that allows all of the power to be transmitted reliably from the driving mechanism to the tool.

Agricultural machines known today have some drawbacks concerning the engagement portions of the tools in the power take-offs of the relative driving mechanisms. Indeed, when the two parts are connected so as to constitute the complete operating machine, breaking often occurs due to tangling effects and/or vibrations. In order to avoid such breaking on the market there are joints having high complexity of design capable of reducing the aforementioned instances of breaking. However, since during the operations due to the changing of the tool the coupling is often exposed to dirt and abrasive contaminants, earth and/or other materials typical or agricultural cultivations, such highly complex joints are often unsuitable for quick cleaning and maintenance and therefore are unreliable. The purpose of the present invention is to make an agricultural driving mechanism and a related tool capable of solving the aforementioned drawbacks of the prior art in an extremely simple, cost-effective and particularly functional manner.

Another purpose is to make an agricultural driving mechanism and a related tool in which the relative engagement portions are such as to avoid breaking due to tangling effects and/or vibrations.

A further purpose is to be able to have an agricultural driving mechanism and a related tool in which the mechanical resistance is divided into equal parts on the machine and on the tool.

Yet another purpose is to be able to have a agricultural driving mechanism and a related tool in which the relative engagement portions are easy to clean of the dirt and abrasive contaminants, earth and/or other materials typical of agricultural cultivations, and/or in any case able to operate correctly even in the presence of a high degree of contaminating agents.

These purposes according to the present invention are achieved by making an agricultural driving mechanism and a related tool as respectively outlined in claims 1 and 2.

The characteristics and advantages of an agricultural driving mechanism and a related tool according to the present invention will become clearer from the following description, given as an example and not for limiting purposes, referring to the attached schematic drawings, in which:
figures 1 and 2 are side elevational views of two example embodiments of agricultural machines according to the present invention provided with different tools;
figure 3 schematically shows the power take-off foreseen on the agricultural machines according to the present invention;
figure 4 shows an enlarged detail of figure 3; and figure 5 schematically shows the coupling portion of the tools according to the present invention with the power shown in figure 3 and foreseen in the agricultural machines according to the present invention.

With reference to the figures, an agricultural driving mechanism is shown with 10 and a related tool is shown with 10'.

Reference numeral 100 indicates the machine in which agricultural driving mechanism 10 and related tool 10' are coupled together.

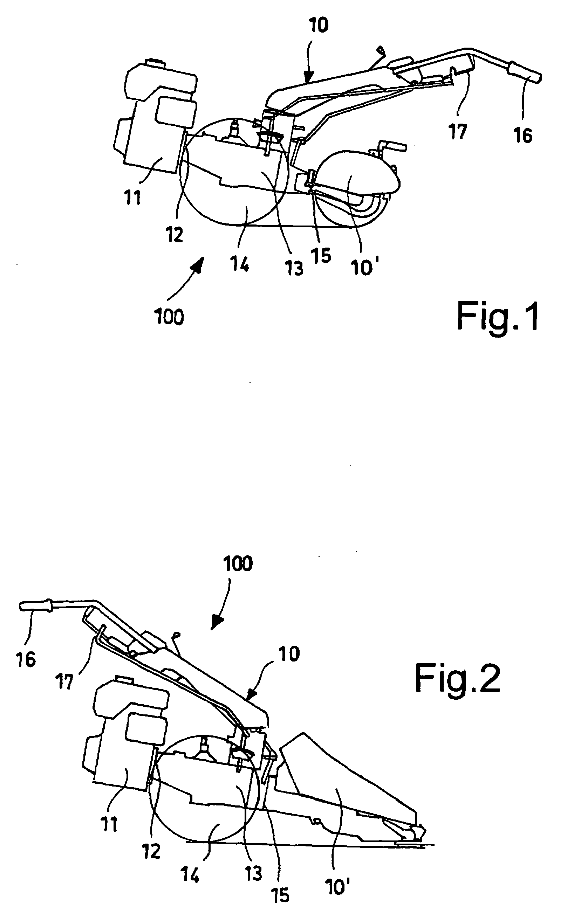

As an example, the tool 10' can be a tiller, as shown in figure 1, or else a mower, as shown in figure 2, and in such cases the agricultural machine 100 is respectively called motor tiller or motor mower.

The agricultural driving mechanism 10 is usually moved by an internal combustion engine 11, running on petrol or on Diesel cycle, in which the power generated is transmitted through a clutch 12 and/or a gearshift 13 to an axle equipped with wheels 14 and to a power take-off 15 that engages the tool 10'.

Indeed, through the power take-off 15 the power flows from the driving mechanism 10 to the tool 10' activating depending on requirements.

The machine 100 is usually driven on foot through a motorcycle style steering bar 16, usually known as "handlebars", which carries the necessary controls 17 for the various actuations.

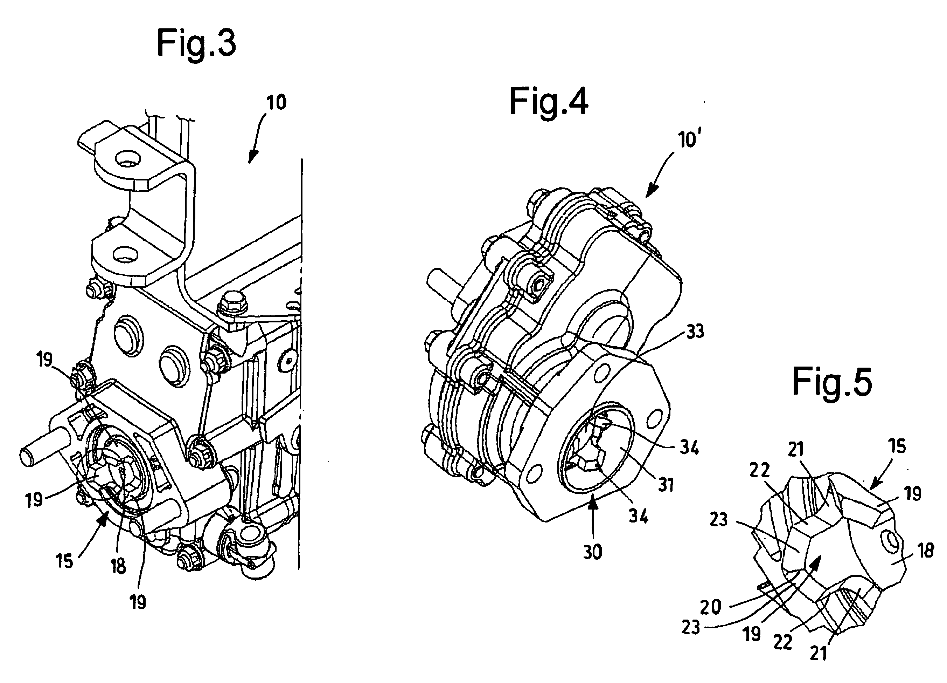

Figure 3 shows a section view of an agricultural driving mechanism 10 according to the present invention and in particular the power take-off 15, shown enlarged in figure 5.

According to the invention such a power take-off 15 comprises a projecting portion of a drive shaft 18 provided with a plurality of tooth-shaped protrusions 19.

In the example shown, on the shaft there are three tooth-shaped protrusions 19 arranged equally spaced apart on the circumference of the drive shaft 18. Analysing the geometry of such tooth-shaped protrusions 19 they comprise V-shaped pointed free ends 20 and widened lower side portions 21 joined with the drive shaft 18.

Moreover, such tooth-shaped protrusions 19 comprise side profiles 22 23 with variable inclination in which it is possible to identify a first lower portion 22 substantially parallel to the axis of the drive shaft 18 and a second upper portion 23 substantially inclined on both sides with respect to said first portion 22.

In a totally complementary manner, the tool 10', shown schematically in figure 4 at the coupling of the power take-off 15 of the driving mechanism 10, comprises a coupling portion 30 provided with a cavity 31 for receiving the projecting portion of a drive shaft 18 provided with the tooth-shaped protrusions 19 wherein in the cavity 31 the free end of a transmission shaft 33 is housed, in turn provided with a plurality tooth-shaped protrusions 34.

In a totally analogous way to the driving mechanism, the tooth-shaped protrusions 34 provided on the transmission shaft 33 are also three in number, equally spaced apart on the circumference of the transmission shaft itself 33.

According to the invention, the geometry of such tooth-shaped protrusions 34 provided on the transmission shaft 33 is the same as that of the tooth-shaped protrusions 19 of the drive shaft 18, i.e. they comprise V-shaped pointed free ends and widened lower side portions joined with the transmission shaft 33.

In accordance with the above, such tooth-shaped protrusions 34 comprise side profiles with variable inclination in which it is possible to identify a first lower portion substantially parallel to the axis of the transmission shaft 33 and a second upper portion substantially inclined on both sides with respect to said first portion.

It is absolutely easy to understand how the agricultural driving mechanism and the related tool object of the invention operate.

The coupling is made up of two similar parts, one positioned on the driving mechanism and the other positioned on the tool, each of which consists of slight tooth shapes.

In this way, since the division of the coupling circumference takes place in 3 equidistant points both on the drive shaft and on the transmission shaft, when the two parts are connected they constitute a complete operating machine with high mechanical resistance where such mechanical resistance is divided equally both on the driving mechanism and on the tool.

The presence of wide radii at the bottom of the teeth reduces the risk of breaking due to tangling effects, whereas the pointed shape of the tooth allows the two driving mechanism/tool components to be axially coupled even if the respective teeth and spaces do not perfectly coincide.

It is absolutely clear how the described solution ensures a high degree of tolerance to contaminating agents, allowing fast and easy cleaning and maintenance of the coupling.

It has thus been seen that an agricultural driving mechanism and a related tool according to the present invention achieves the purposes highlighted earlier. Indeed, the agricultural driving mechanism and the related tool have a coupling such as to avoid breaking due to tangling effects and/or vibrations in which the mechanical resistance is divided into equal parts on the machine and on the tool.

Moreover, such a coupling of the present invention is extremely tolerant of contaminating agents typical of agricultural work.

## Claims

1. Agricultural driving mechanism (10) of the type comprising a motor (11) for delivering power to a power take-off (15) for coupling a tool (10'), whereby said power take-off (15) comprises a projecting portion of a drive shaft (18) provided with a plurality of tooth-shaped protrusions (19) for removably coupling with matching protrusions foreseen on said tool (10'), whereby said tooth-shaped protrusions have widened lower portions (21) joined with said drive shaft (18) and said tooth-shaped protrusions (19) comprises side profiles (22, 23) with variable inclination, **characterised in that** said driving mechanism (10) comprises three tooth-shaped protrusions (19) arranged equally spaced apart on the circumference of said drive shaft (18), said tooth-shaped protrusions (19) having V-shaped pointed free ends (20) and said side profiles (22, 23) of said tooth-shaped protrusions (19) comprising a first lower portion (22) substantially perpendicular to said end of said drive shaft (18) and a second upper portion (23) substantially inclined by 45° with respect to said first portion (22).

2. Tool (10') able to engage on a agricultural driving mechanism according to the previous claim of the type comprising a work implement and a coupling portion (30) with said power take-off (15) of said driving mechanism (10), **characterised in that** said coupling portion (30) comprises a cavity (31) for receiving the portion of said drive shaft (18) projecting from said power take-off (15) and provided with said tooth-shaped protrusions (19), said cavity (31) housing the free end of a transmission shaft (33) provided with a plurality of tooth-shaped protrusions (34) for removably coupling with said tooth-shaped protrusions (19) foreseen on said drive shaft (18), said tool (10') comprising three tooth-shaped protrusions (34) arranged equally spaced apart on the circumference of said transmission shaft (33), said tooth-shaped protrusions (34) having V-shaped pointed free ends and widened lower portions joined with the end of said transmission shaft (33), said tooth-shaped protrusions (34) comprising side profiles with variable inclination, said side profiles of said tooth-shaped protrusions (34) comprising a first lower portion substantially perpendicular to said end of said drive shaft and a second upper portion substantially inclined by 45° with respect to said first portion.

## Patentansprüche

1. Landwirtschaftlicher Antriebsmechanismus (10), der einen Motor (11) für die Abgabe von Leistung an einen Nebenantrieb (15) zum Koppeln eines Arbeitsgeräts (10') umfasst, wobei dieser Nebenantrieb (15) einen herausragenden Teil einer Antriebswelle (18) umfasst, der mit einer Vielzahl von zahnförmigen Vorsprüngen (19) für die lösbare Verbindung mit auf diesem Arbeitsgerät (10') vorgesehenen zusammenpassenden Vorsprüngen versehen ist, wobei die zahnförmigen Vorsprünge verbreiterte untere Abschnitte (21) aufweisen, die mit der Antriebswelle (18) verbunden sind, und wobei diese zahnförmigen Vorsprünge (19) Seitenprofile (22, 23) mit variabler Neigung aufweisen, **dadurch gekennzeichnet, dass** dieser Antriebsmechanismus (10) drei zahnförmige Vorsprünge (19) umfasst, die gleichmäßig beabstandet auf dem Umfang der Antriebswelle (18) angeordnet sind, wobei die zahnförmigen Vorsprünge (19) V-förmig zugespitzte freie Enden (20) aufweisen und die Seitenprofile (22, 23) der zahnförmigen Vorsprünge (19) einen ersten unteren Abschnitt (22), der im Wesentlichen perpendikulär zu diesem Ende der Antriebswelle (18) ist, und einen zweiten oberen Abschnitt (23) umfassen, der im Wesentlichen um 45° zu dem ersten Abschnitt (22) geneigt ist.

2. Arbeitsgerät (10'), das an einen landwirtschaftlichen Antriebsmechanismus nach dem vorhergehenden Anspruch gekuppelt werden kann und das ein Arbeitswerkzeug und einen Abschnitt (30) zum Koppeln mit dem Nebenantrieb (15) des Antriebsmechanismus (10) umfasst, **dadurch gekennzeichnet, dass** der Kopplungsabschnitt (30) einen Hohlraum (31) für die Aufnahme des Teils der Antriebswelle (18) umfasst, der aus dem Nebenantrieb (15) herausragt und mit den zahnförmigen Vorsprüngen (19) versehen ist, wobei dieser Hohlraum (31) das freie Ende einer Transmissionswelle (33) beherbergt, das mit einer Vielzahl von zahnförmigen Vorsprüngen (34) für die lösbare Verbindung mit den auf der Antriebswelle (18) vorgesehenen zahnförmigen Vorsprüngen (19) versehen ist, wobei dieses Arbeitsgerät (10') drei zahnförmige Vorsprünge (34) umfasst, die gleichmäßig beabstandet auf dem Umfang der Transmissionswelle (33) angeordnet sind, wobei diese zahnförmigen Vorsprünge (34) V-förmig zugespitzte freie Enden und mit dem Ende der Transmissionswelle (33) verbundene verbreiterte untere Abschnitte aufweisen, wobei diese zahnförmigen Vorsprünge (34) Seitenprofile mit variabler Neigung umfassen, wobei diese Seitenprofile der zahnförmigen Vorsprünge (34) einen ersten unteren Abschnitt, der im Wesentlichen perpendikulär zu dem Ende der Antriebswelle ist, und einen zweiten oberen Abschnitt umfassen, der im Wesentlichen um 45° zu dem ersten Abschnitt geneigt ist.

## Revendications

1. Mécanisme de commande agricole (10) du type comprenant un moteur (11) pour délivrer un puissance à une prise de force (15) pour accoupler un outil (10'), dans lequel ladite prise de force (15) comprend une portion faisant saillie d'un arbre d'entraînement (18) muni d'une pluralité de saillies en forme de dent (19) pour l'accouplement amovible avec des saillies correspondantes prédisposées sur ledit outil (10'), dans lequel lesdites saillies en forme de dent comportent des portions inférieures élargies (21) unies audit arbre d'entraînement (18) et lesdites saillies en forme de dent (19) comportent des profils latéraux (22, 23) avec inclinaison variable, **caractérisé en ce que** ledit mécanisme de commande (10) comprend trois saillies en forme de dent (19) disposées uniformément espacées sur la circonférence dudit arbre d'entraînement (18), lesdites saillies en forme de dent (19) comportant des extrémités libres effilées en forme de V (20), lesdits profils latéraux (22, 23) desdites saillies en forme de dent (19) comportant une première portion inférieure (22) sensiblement perpendiculaire à ladite extrémité dudit arbre d'entraînement (18) et une deuxième extrémité supérieure (23) sensiblement inclinée à 45° par rapport à ladite première portion (22).

2. Outil (10') pouvant s'engager sur un mécanisme de commande agricole selon la revendication précédente du type comprenant un instrument de travail et une portion d'accouplement (30) avec ladite prise de force (15) dudit mécanisme de commande (10), **caractérisé en ce que** ladite portion d'accouplement (30) comprend une cavité (31) pour recevoir la portion dudit arbre d'entraînement (18) faisant saillie de ladite prise de force (15) et munie desdites saillies en forme de dent (19), ladite cavité (31) logeant l'extrémité libre d'un arbre de transmission (33) muni d'une pluralité de saillies en forme de dent (34) pour l'accouplement amovible avec lesdites saillies en forme de dent (19) prédisposées sur ledit arbre d'entraînement (18), ledit outil (10') comprenant trois saillies en forme de dent (34) disposées uniformément espacées sur la circonférence dudit arbre de transmission (33), lesdites saillies en forme de dent (34) comportant des extrémités libres effilées en forme de V et des portions inférieures élargies unies à l'extrémité dudit arbre de transmission (33), lesdites saillies en forme de dent (34) comportant des profils latéraux avec inclinaison variable, lesdits profils latéraux desdites saillies en forme de dent (34) comportant une première portion inférieure sensiblement perpendiculaire à ladite extrémité dudit arbre d'entraînement et une deuxième portion supérieure sensiblement inclinée à 45° par rapport à ladite première portion.
